# EUROPÄISCHE PATENTSCHRIFT

(11) **EP 0 918 946 B1**
(45) Veröffentlichungstag und Bekanntmachung des Hinweises auf die Patenterteilung: **08.03.2000**
(21) Anmeldenummer: 97933618.7
(22) Anmeldetag: 03.07.1997
(51) Int. Cl.: F16C 13/00

(54) **KALANDER**
CALENDER
CALANDRE

(30) Priorität: 14.08.1996 DE 19632769
(43) Veröffentlichungstag der Anmeldung: 02.06.1999
(73) Patentinhaber: Eduard Küsters Maschinenfabrik GmbH & Co. KG, 47805 Krefeld (DE)
(72) Erfinder: KÜSTERS, Karl-Heinz, D-47804 Krefeld (DE)
(74) Vertreter: Palgen, Peter, Dipl.-Phys. Dr.
(86) Internationale Anmeldenummer: DE9701402
(87) Internationale Veröffentlichungsnummer: WO9806951

(56) Entgegenhaltungen:
- EP-A- 0 091 586
- DE-A- 2 010 322
- DE-A- 2 254 392
- DE-A- 2 320 519
- DE-A- 3 820 974
- DE-A- 3 941 965
- DE-B- 2 632 452
- DE-B- 2 848 021

## Beschreibung

Die Erfindung bezieht sich auf einen Kalander der dem Oberbegriff des Anspruchs 1 entsprechenden Art.

Bei den im Oberbegriff geschilderten Walzen liegen die Lagertaschen mit ihrem ringsum geschlossenen Rand am Innenumfang der Hohlwalze an und bilden im wesentlichen geschlossene hydrostatische Druckkammern, deren Druck gegen den Innenumfang der Hohlwalze wirkt und die Linienkraft im Walzspalt erzeugt. Die Druckflüssigkeit wird über die erste Zuleitung herangeführt und strömt über den Rand der Lagertaschen ständig nach außen ab, wobei sich zwischen Rand und Innenumfang der Hohlwalze ein tragender Flüssigkeitsfilm bildet, der eine metallische Berührung verhindert. Damit die Lagertaschen dicht sind und sich ein Druck in ihnen aufbauen kann, muß der Rand mit einer bestimmten Kraft gegen den Innenumfang der Hohlwalze gedrückt werden. Dies geschieht durch den Druck in dem geschlossenen Zylinderraum, die in einer Kolben/Zylindereinheit in dem Stützelement ausgebildet ist, dessen Kraft das Stützelement und damit den Rand gegen den Innenumfang der Hohlwalze andrückt. Die Druckflüssigkeit zur Beaufschlagung des Zylinderraums wird durch die zweite Zuleitung herangeführt. Während die Lagertaschen individuell oder in verschiedenen Gruppen mit Druckflüssigkeit unterschiedlicher Drücke beaufschlagt werden, um längs des Walzspalts ein Linienkraftprofil gewünschter Art einstellen zu können, sind die Zylinderräume in der Praxis meist an eine gemeinsame Zuleitung mit einem einzigen Druck angeschlossen, der zur Aufrechterhaltung einer ausreichenden Anlage bemessen ist.

Eine Walze mit zwei Zuleitungen zu den Stützelementen ist aus der DE 38 20 974 C2 bekannt. Eine solche Walze ist auch bereits in einem Kalander eingesetzt worden, der damit den gattungsgemäßen Stand der Technik darstellt. Ein wichtiges Merkmal der Walze nach der DE 38 20 974 C2 liegt darin, daß die Lagertaschen drosselfrei mit der ersten Zuleitung verbunden sind, d.h. daß die Druckflüssigkeit durch in dem Stützelement vorhandene innere Kanäle mit im Normalbetrieb keinen wesentlichen Druckabfall verursachenden Querschnitt aus dem Raum "unter dem Stützelement in die Lagertaschen übertreten kann.

Die Walzen der beschriebenen Art werden auch in Kalandern mit kunststoffbezogenen Walzenmänteln eingesetzt. Die Kunststoffbezüge sind mechanisch und thermisch wesentlich empfindlicher als eine metallische Walzenoberfläche. Bei Bahnstörungen kommt es daher leicht zu Beschädigungen eines solchen weichen Walzenbezugs. Als Bahnstörung soll zum Beispiel ein Bahnabriß gemeint sein, der dazu führt, daß eine Walze mit einem Kunststoffbezug mit einemmal unmittelbar mit einer heißen Gegenwalze in Berührung kommt, was der Kunststoff nicht verträgt. Im Normalbetrieb ist die Walzenoberfläche durch die kühlere Bahn, zum Beispiel die Papierbahn, vor der heißen Gegenwalze geschützt. Auch Bahndopplungen können bei hohen Linienkräften die Oberfläche des Kunststoffbezuges schädigen, indem sie sich eindrücken.

Bei derartigen Bahnstörungen ist eine schnelle Öffnung des Walzspalts wegen der Gefahr der Beschädigung des Walzenbezuges unbedingt notwendig.

Während der normalen Produktion des Kalanders ist das Querhaupt der Walze von den Kräften der den Walzenmantel abstützenden Stützelemente vom Walzspalt hinweg durchgebogen. Bei Kalandern mit großer Breite beträgt diese Durchbiegung in der Mitte mehrere Zentimeter. Die Abstandsveränderung zwischen Querhaupt und Innenumfang des Walzenmantels wird durch Ausfahren der Stützelemente senkrecht zum Querhaupt bewältigt. Das unter dem Stützelement eingeschlossene Druckflüssigkeitsvolumen ist um eine diesem Ausfahrweg entsprechende Menge vergrößert.

Dies trifft auch bei Kalandern mit durchbiegungssteuerbaren Walzen mit sogenanntem inneren Hub zu. Hierbei wird zur Anstellung an eine Gegenwalze nicht das Querhaupt einer solchen Walze in seiner Lagerung am Walzenständer, sondern die Hohlwalze quer zu ihrer Achse über ihren sogenannten "inneren Hub" zur Freigabe der Walzspalte verlagert (DE 22 54 392B). Dabei fahren die Stützelemente gegen das Querhaupt hin ein oder aus, so daß der Walzenmantel parallel zu sich selbst in diesen Richtungen nachfolgen kann. Bei den Walzen mit innerem Hub ist die Hohlwalze an ihren Enden auf dem Querhaupt nicht gelagert, sondern lediglich am Querhaupt in der Wirkebene senkrecht zu ihrer Achse geführt. Das Problem, daß bei angestellter Walze und entsprechend ausgefahrenen Stützelementen "unter" diesen große Druckflüssigkeitsvolumina eingeschlossen sind, besteht auch hier.

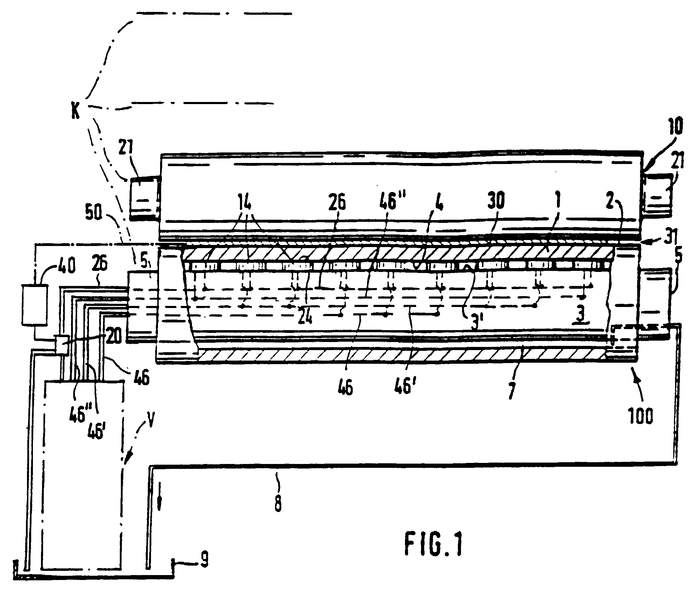

Bei den Ausdrücken "unten" und "oben" liegt die Vorstellung eines wie in Fig. 1 obenliegenden Walzspalts zugrunde.

Soll nun der Walzspalt schnell entlastet werden, so müssen diese Druckflüssigkeitsvolumina sehr schnell aus dem Stützelement entweichen können. Dies gilt sowohl für gelagerte Walzen, bei denen das Querhaupt nur durchgebogen ist und nur die axial inneren Stützelemente bei der Strekkung des Querhaupts wieder eingefahren werden müssen, aber auch für Walzen mit innerem Hub, bei denen das Querhaupt sich nicht nur streckt, sondern auch insgesamt gegenüber der Hohlwalze quer versetzt.

Die Volumina, die entweichen können müssen, sind an sich nicht sehr groß und betragen zum Beispiel bei einem einzelnen Stützelement von 200 mm Durchmesser etwa 942 cm³ bei 3 cm Verlagerung, sei es aufgrund der Durchbiegung des Querhaupts in der Mitte, sei es aufgrund des Querversatzes bei innerem Hub. Soll der Walzspalt jedoch in höchstens 0,5 Sekunden entlastet werden, so entspricht dies einem momentanen Ölstrom von 113 000 cm³/min.

Da bei den Walzen der in Rede stehenden Art bei Einzelansteuerung jedes einzelnen Stützelements oder der Ansteuerung in kleinen Gruppen jedes Stützelement bzw. jede Gruppe über eine separate Leitung mit dem Druckversorgungs- und -regelsystem außerhalb der Walze verbunden werden muß und die Stabilität des Querhaupts nicht durch große innere Kanäle beeinträchtigt werden darf, sind aus Platzgründen innerhalb des Querhaupts nur relativ kleine Leitungsquerschnitte möglich. Durch diese Leitungsquerschnitte ist das zur Schnellentlastung abzuführende vorerwähnte Druckflüssigkeitsvolumen in der geforderten Zeit bei den zur Verfügung stehenden Drücken nicht hindurchzubringen.

Bei den herkömmlichen mit konventionellen Walzen ausgerüsteten Kalanderstapeln, bei denen sich harte Walzen mit weichen Walzen, früher meist sogenannten Papierwalzen, abwechseln, ist das Problem altbekannt und schon mehrfach gelöst, zum Beispiel, indem die Walzen beim Auftreten der Bahnstörung in ihren seitlichen Lagerungen um eine bestimmte Strecke bis auf Anschläge derart herunterfallen gelassen werden, daß alle Walzspalte des Kalanders gleichzeitig geöffnet werden (DE 20 10 322A).

Auch bei Kalandern mit durchbiegungssteuerbaren Walzen gibt es bereits Lösungen, bei denen allerdings dem Problem der Leitungsquerschnitte keine Beachtung geschenkt ist (DE 23 20 519B).

Aus der DE 28 48 021 B1 ist eine nicht gattungsgemäße Walze bekannt, bei der eine Schnellentlastungseinrichtung bereits realisiert ist. Es handelt sich jedoch um eine Walze nach dem Nipco-Prinzip, bei der jedes Stützelement nur mit einer Druckflüssigkeit beschickt wird. Das kolbenartige Stützelement sitzt verschieblich in einer Zylinderbohrung des Querhaupts, in die die Druckflüssigkeit geleitet wird. In dem Stützelement ist eine Drosselbohrung ausgebildet, die die Zylinderkammer unter dem Stützelement mit den Lagertaschen verbindet. Die Druckflüssigkeit tritt also zunächst in die Zylinderkammer unter dem Stützelement ein und preßt dieses gegen den Innenumfang der Hohlwalze. Sodann gelangt die gleiche Druckflüssigkeit durch die Drosselbohrung in die Lagertaschen und übt hier die Funktion der hydrostatischen Abstützung der Hohlwalze an dem Stützelement aus. Bei der DE 28 48 021 B1 wird durch ein Ventil die Zufuhr von Druckflüssigkeit zu allen Stützelementen gleichzeitig unterbrochen. Dadurch fällt die Anpressung, gleichzeitig aber auch die hydrostatische Abstützung und die Schmierung des einzelnen Stützelements gegenüber dem Innenumfang der Hohlwalze weg.

Die Aufgabe der Erfindung besteht darin, für die gattungsgemäßen Kalander eine wirksame Schnellöffnungseinrichtung zu schaffen.

Diese Aufgabe wird durch die in Anspruch 1 angegebene Erfindung gelöst.

Durch das Wegschalten des hydraulischen Drucks der den Zylinderraum bildenden Kolben/Zylindereinheit, welche das Stützelement gegen den Innenumfang der Hohlwalze preßt und damit die Dichtfunktion an der Lagertasche gewährleistet, wird diese Dichtfunktion aufgehoben, und das von dem Stützelement eingeschlossene Druckflüssigkeitsvolumen kann schlagartig in den Ringraum zwischen Querhaupt und Hohlwalze entweichen. Dies betrifft sowohl die Menge in den Lagertaschen, insbesondere aber die "unter" dem Stützelement befindliche Menge, die verdrängt werden muß, damit das Stützelement einfahren kann. Die Verdrängung erfolgt nicht in die Zuleitungen hinein, sondern durch die einen drosselfreien Querschnitt aufweisenden inneren Kanäle des Stützelements nach "oben" durch die Lagertaschen hindurch in den Zwischenraum zwischen Querhaupt und Hohlwalze.

Alle Stützelemente sind an eine gemeinsame Druckversorgung der die Anpressung bewirkenden Kolben/Zylindereinheit angeschlossen. Da die Druckflüssigkeitsvolumina der Zylinderraum im Verhältnis zu den Volumina der in den Lagertaschen und unter den Stützelementen arbeitenden Druckflüssigkeit sehr klein sind, können diese bei den vorhandenen Leitungsquerschnitten rasch genug ausströmen, um die Dichtwirkung am Rand der Lagertaschen so weit aufzuheben, daß die wesentlich größere für die Lagertaschen bestimmte Druckflüssigkeitsmenge in den Stützelementen praktisch schlagartig über den Rand der Lagertaschen in den Ringraum übertreten kann. So ergibt sich eine sehr schnelle und, da alle Zylinderräume meist über eine gemeinsame Zuleitung versorgt werden, auch sehr gleichmässige Entlastung der Lagertaschen und damit des Walzspalts. Die Lagertaschen sind nach dem Öffnen des Ventils zwar weitgehend drucklos aber nicht von der Druckflüssigkeitsversorgung abgeschnitten. Sie bleiben vielmehr mit der für sie bestimmten Druckflüssigkeit gefüllt, so daß es nicht zu metallischer Reibung der Ränder der Stützelemente an dem Innenumfang der Hohlwalze kommen kann.

In der Zeichnung ist ein Ausführungsbeispiel der Erfindung wiedergegeben.
Fig. 1 zeigt eine Seitenansicht eines schematisch wiedergegebenen Walzenpaars, welches einen Kalander bildet oder Bestandteil eines Kalanders ist;
Fig. 2 zeigt einen Schnitt durch ein einzelnes Stützelement;
Fig. 3 zeigt eine Ansicht des Stützelements gemäß Fig. 2.

Von dem als Ganzes mit K bezeichneten Kalander ist in Fig. 1 nur ein Walzenpaar dargestellt, welches eine Oberwalze 10 und eine Unterwalze 100 umfaßt, zwischen denen in dem Walzspalt 31 eine Papierbahn 30 einer Druckbehandlung ausgesetzt wird, deren Dicke stark übertrieben wiedergegeben ist. Die Oberwalze 10 ist eine konventionelle massive Walze. Die Unterwalze 100 hingegen umfaßt eine umlaufende Hohlwalze 1, deren Außenumfang 2 den arbeitenden Walzenumfang bildet und die der Länge nach von einem undrehbaren Querhaupt 3 durchgriffen ist, welches allseitig Abstand zum Innenumfang 4 der Hohlwalze 1 beläßt, so daß es sich innerhalb der Hohlwalze 1 verlagern kann, ohne mit dem Innenumfang 4 in Berührung zu kommen. Die Hohlwalze 1 kann an den Enden auf nicht dargestellten Lagern auf dem Querhaupt 3 abgestützt sein. In diesem Fall betrifft die Verlagerung nur die Durchbiegung des Querhauptes 3 im Innern der Hohlwalze 1. Die Hohlwalze 1 kann aber in einer alternativen Ausführungsform, die auch als eine solche mit "innerem Hub" bezeichnet wird, sich als Ganzes in der Wirkebene gegenüber dem Querhaupt 3 verlagern. Die Hohlwalze 1 ist in diesem Fall nicht über die Lager auf dem Querhaupt abgestützt, sondern nur in der Wirkebene geführt. Die Verlagerung betrifft hierbei die Verlagerung in der Führung, der sich die Durchbiegung überlagert.

Die Zapfen 21 der Oberwalze 10 sowie die aus der Hohlwalze 1 an deren Enden vorstehenden Enden 5 des Querhauptes 3 sind im nicht dargestellten Walzenständer abgestützt.

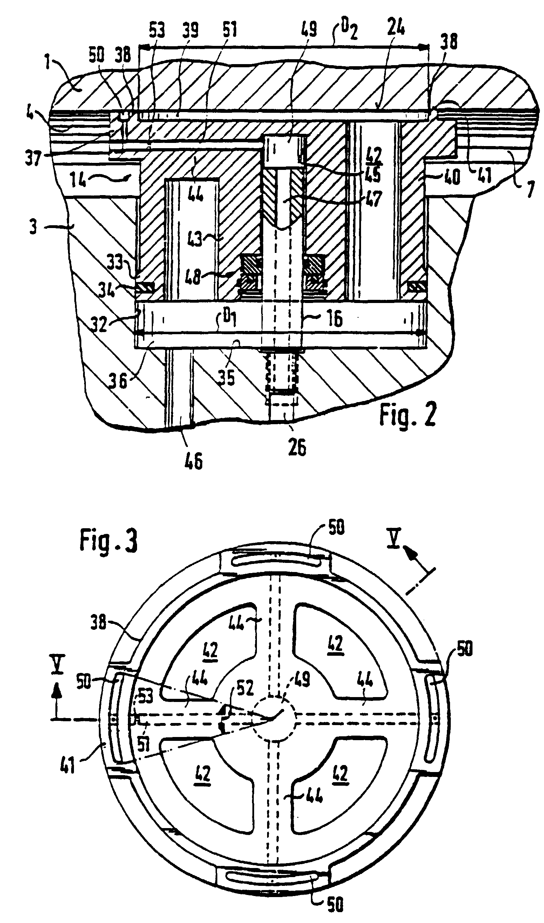

Auf der gegen den Walzenspalt 31 gerichteten Oberseite 3' des Querhauptes 3 sind über die Länge der Hohlwalze 1 verteilt mehrere, in dem dargestellten Ausführungsbeispiel neun, hydraulische Stützelemente 14 angeordnet, die mit ihrer dem Außenumfang 4 der Hohlwalze 1 in der Gestalt angepaßten Anlagefläche 24 am Innenumfang 4 der Hohlwalze 1 anliegen. In den Fig. 2 und 3 ist eine in Betracht kommende Ausführungsform der Stützelemente 14 erläutert.

In der Anlagefläche 24 ist eine flache Lagertasche 39 (Fig. 2) ausgebildet, die einen wesentlichen Teil der Anlagefläche 24 einnimmt, so daß von ihr nur berandende Stege 38 übrigbleiben, die geschlossen um die Lagertaschen 39 herumgehen. In dem Ausführungsbeispiel ist das Stützelement 14 im Anlagebereich im Querschnitt kreisrund, es kann aber dort auch quadratisch oder rechteckig sein.

Wie aus Fig. 2 ersichtlich ist, umfaßt das Dichtungsglied 14 ein zylindrisches kolben- oder stempelartiges Gehäuse 40, welches mit Spiel in einer Zylindersackbohrung 32 des Querhaupts 3, sitzt, am gemäß Fig. 2 unteren Ende einen bis auf das Maß der Zylindersackbohrung 32 vorspringenden Rand 33 aufweist und dort durch eine umlaufende kolbenringartige Dichtung 34 bei der Hubbewegung des Dichtungsgliedes 14 in Achsrichtung der Zylindersackbohrung 32 abgedichtet ist. Auf der Unterseite des Dichtungsgliedes 14 ist zwischen diesem und dem Boden 35 der Zylindersackbohrung 32 eine Zylinderkammer 36 gebildet, die durch eine "erste" Zuleitung 46 mit Druckflüssigkeit füllbar ist. Am oberen Ende weist das zylindrische Gehäuse 40 einen umlaufenden Vorsprung 37 auf.

Das Dichtungsglied 14 ist in seinem die Zylindersackbohrung 32 ausfüllenden Querschnitt nicht geschlossen, sondern durch einen großen Quersch it aufweisende, von der Unterseite bis in die Lagertasche 39 durchgehende Kanäle 42 durchbrochen. Das Gehäuse 40 des Dichtungsgliedes 14 ist im unteren Teil hohlzylindrisch ausgebildet und enthält einen konzentrischen zylindrischen Mittelteil 43, der in dem Ausführungsbeispiel durch vier radiale Stege 44 gehalten ist, die zu dem äußeren Teil des Gehäuses 40 hinführen. Die Kanäle 42 sind in der aus Fig. 3 ersichtlichen Weise zwischen den Stegen 44 gebildet. Bedingt durch den großen Querschnitt der Kanäle 42 steht der Druck der "ersten" Zuleitung 46 auch in der Lagertasche 39 an und wirkt in deren Querschnitt gegen den Innenumfang 4 der Hohlwalze 1. Dieser Druck ist höher als der Druck in dem umgebenden Ringraum 7, der auch ganz drucklos sein kann.

In dem zylindrischen Mittelteil 43 ist eine oben geschlossene Zylinderbohrung 45 angebracht, in die ein in den Boden 35 der Zylinderkammer 36 dicht eingeschraubter Kolben 16 geringen Durchmessers eingreift, der eine Längsbohrung 47 aufweist, die mit einer "zweiten" Zuleitung 26 in dem Querhaupt 3 in Verbindung steht. Durch eine Dichtungsanordnung 48 im unteren Bereich des Mittelteils 43 ist der Kolben 16 gegenüber der Zylinderbohrung 45 abgedichtet. Oberhalb des Kolbens 16 ist ein Zylinderraum 49 gebildet, der über die Stege 44 durchsetzende radiale Kanäle 51 mit in der Anlagefläche 41 des Randes ausgebildeten Randkammern 50 in Verbindung steht, die ringsum vom Rand 38 umschlossen und gegen den Innenumfang 4 der Hohlwalze 1 hin offen sowie im Bereich der Stege 44 angeordnet sind und in dem Ausführungsbeispiel einen Umfangswinkel 52 von ca. 35° einnehmen.

Wesentlich ist, daß der Kanal 51 drosselnd ausgebildet ist, d.h. selbst auf seiner ganzen Länge einen geringfügigen Durchmesser aufweist oder aber eine eingesetzte Drosselstelle oder eine Blende 53, wie in Fig.2 dargestellt, enthält. Durch die Drosselung bedingt, stellt sich an der einen Teil der Anlagefläche 41 bildenden Umrandung der Randkammern 50 ein tragender Flüssigkeitsfilm ein, der das Dichtungsglied 14 gegen den in dem Zylinderraum 49 ausgeübten, gegen den Innenumfang 4 der Hohlwalze 1 gerichteten Druck abstützt. Die in dem Ausführungsbeispiel vorhandenen vier gleichmäßig über den Umfang verteilten Randkammern 50 sind voneinander getrennt und werden getrennt gedrosselt mit Druckflüssigkeit versorgt, so daß ein tragender Flüssigkeitsfilm einer vorbestimmten Stärke an über den Umfang verteilten Stellen vorhanden ist und das ganze Dichtungsglied 14 auf diese Weise stabil auf einem Flüssigkeitsfilm getragen und auch in den Zwischenbereichen zwischen den Randkammern 50 (die sich also nicht über den gesamten Umfang erstrecken müssen) in einem vorgegebenen sehr kleinen Abstand vom Innenumfang 4 der Hohlwalze 1 gehalten wird, so daß es an keiner Stelle zu einer metallischen Berührung zwischen dem Rand 38 und dem Innenumfang 4 der Hohlwalze 1 kommen kann. Für eine vollständige derartige Stabilisierung sind mindestens drei voneinander unabhängige Randkammern 50 erforderlich, doch könnten außer den in dem Ausführungsbeispiel gezeigten vier Randkammern 50 auch mehr vorhanden sein.

Die für die Stabilisierung mittels der Randkammern 50 benötigten Druckflüssigkeitsmengen sind gering, so daß der Zylinderraum 49 im vorliegenden Zusammenhang als "im wesentlichen geschlossen" betrachtet werden kann.

In dem Ausführungsbeispiel der Fig. 2 und 3 ist der Durchmesser D₂ der kreisförmig begrenzten Lagertasche 39 gleich dem Durchmesser D₁ der Zylinderkammer 36. In diesem Fall ist das Dichtungsglied 14 von den in der Druckkammer 39 gegen den Innenumfang 4 der Hohlwalze 1 ausgeübten Kräften völlig frei und wird der zur Abdichtung notwendige Anlagedruck ausschließlich durch den Druck in dem Zylinderraum 49 bestimmt.

Es ist aber auch möglich, den Durchmesser D₂ der Lagertasche 39 geringfügig, d.h. einige Prozent, größer zu machen als den Durchmesser D₁. In diesem Fall entsteht durch den Druck in der Lagertasche 39 eine gewisse Überschußkraft, die das Dichtungsglied 14 von dem Innenumfang 4 der Hohlwalze 1 wegzudrücken bestrebt ist, die aber durch den Druck im Zylinderraum 49 überwunden wird.

In beiden Fällen erfolgen eine Anpressung des Stützelements 14 an den Innenumfang 4 mit einer vorbestimmbaren Kraft und eine entsprechende Abdichtung der Lagertasche 39 und der Randkammern 50.

Die Beaufschlagung der Stützelemente 14 mit Druckflüssigkeit erfolgt mittels der Versorgungseinheit V. Für alle Stützelemente 14 ist eine gemeinsame Zuleitung 26 für den Anpreßdruck und die Versorgung der Randkammern 50 vorgesehen. Die in dem Ausführungsbeispiel vorhandenen neun Stützelemente sind in drei Gruppen unterteilt: drei in der Mitte, je zwei rechts und links davon und je eines an den Enden. Diese Gruppen werden hinsichtlich der Lagertaschen 39 separat und unabhängig voneinander mit Druckflüssigkeit über die Zuleitungen 46,46' und 46'' versorgt. Auf diese Weise läßt sich in dem Walzspalt 31 ein gewünschtes, zur Mitte symmetrisches Linienkraftprofil einstellen.

Wenn im Walzspalt 31 die Linienkraft zur Oberflächenbehandlung der Papierbahn 30 ausgeübt wird, die im wesentlichen durch die hydrostatische Kraft der in den Lagertaschen 39 der Stützelemente 14 vorhandene Druckflüssigkeit erzeugt wird, so biegt sich das Querhaupt 3 unter der Wirkung dieser in Querrichtung auf das Querhaupt 3 wirkenden Punktlasten von dem Walzspalt 31 hinweg, also gemäß Fig. 1 nach unten durch. Die Hohlwalze 1 bleibt im wesentlichen gerade oder paßt sich einer geringfügig durchgebogenen Gegenwalze 10 an. Dadurch ergeben sich Abstandsänderungen zwischen der Oberseite des Querhauptes 3 und dem Innenumfang 4 der Hohlwalze 1, denen die Stützelemente 14 folgen, indem sie weiter aus der Zylindersackbohrung 32 ausfahren.

Auch bei Walzen mit innerem Hub sind die Stützelemente 14 im Normalbetrieb recht weit ausgefahren. Dieser Verlagerung überlagert sich die durchbiegungsbedingte Verlagerung der Stützelemente.

Wenn ein Bahnriß oder eine sonstige Bahnstörung auftreten, muß der Walzspalt 31 schnellstens gelüftet werden, um Schäden an einem aus empfindlichem Material, insbesondere Kunststoff bestehenden Walzenbezug zu verhindern.

Um die Linienkraft in dem Walzspalt 31 herunterzubringen und den Walzspalt 31 zu öffnen, muß das Querhaupt 3 in den unverformten geraden Zustand zurückgeführt werden. Das bedeutet, daß sich der Abstand zwischen der Oberseite des Querhaupts 3 und dem Innenumfang 4 der Hohlwalze 1 in der Mitte der Walze 100 wieder verringert, was bedingt, daß die dortigen Stützelemente 14 rasch einfahren müssen. Sie enthalten aber in der Zylinderkammer 36 eine gewisse Menge an Druckflüssigkeit, die durch die Leitung 46 nicht schnell genug zurückströmen kann, selbst wenn diese in den Vorrat 9 geöffnet wird, weil der Querschnitt der Leitung 46 begrenzt ist. Der Druck in dem Stützelement 14 würde sich also nur langsam abbauen, bzw. es würde zunächst das Querhaupt 3 in seinem gebogenen Zustand verbleiben und die Linienkraft in dem Walzspalt 31 zunächst noch in erheblichem, zu zögerlich absinkendem Umfang bestehenbleiben.

Wie aus Fig. 1 ersichtlich ist, ist in der Zuleitung 26 zu dem im wesentlichen geschlossenen Zylinderraum 49 ein Entlastungsventil 20 angeordnet, welches die Leitung 26 schlagartig mit dem Vorrat 9 verbinden kann. Betätigt wird das Ventil 20 durch ein Steuergerät 40, welches mit einem Sensor 50 verbunden ist, der auf den Zustand der Papierbahn 30 anspricht und zum Beispiel bei Nichtvorhandensein der Papierbahn 30 nach einem Bahnriß ein Signal abgibt, welches das Steuergerät 40 zu einer Betätigung des Ventils 20 veranlaßt, welches dann die Leitung 26 mit dem drucklosen Vorrat 9 verbindet. Dadurch werden die Zylinderräume 49 schlagartig gemeinsam entlastet. Die dafür zu verlagernde Druckflüssigkeitsmenge ist relativ gering, weil der Querschnitt der Zylinderräume 49 weniger als ein Zehntel des Querschnitts der Zylindersackbohrung 32, in dem Ausführungsbeispiel etwa ein Sechzehntel, beträgt. Schon bei einer kleinen Verlagerung eines Stützelementes 14 unter dem Druck in der Lagertasche 39 von dem Innenumfang der Hohlwalze 1 hinweg gegen den rasch absinkenden Druck in dem Zylinderraum 49 hebt die Dichtung an dem Rand 38 der Lagertasche 39 auf und läßt die darin befindliche Druckflüssigkeit in den Zwischenraum 7 hinausschießen und den Druck in der Lagertasche 39 zusammenbrechen, so daß keine Kraft mehr gegen den Innenumfang 4 der Hohlwalze 1 ausgeübt und das Querhaupt 2 bei seiner Rückkehr in den enlasteten geraden Zustand nicht behindert wird.

## Patentansprüche

1. Kalander (K)
mit mindestens einer durchbiegungssteuerbaren Walze (100),
mit einer den arbeitenden Walzenumfang (2) bildenden umlaufenden Hohlwalze (1) und einem diese der Länge nach durchgreifenden, rundum Abstand zum Innenumfang (4) der Hohlwalze (1) belassenden undrehbaren Querhaupt,
mit mehreren längs des Querhauptes (3) aufgereihten, an dem Querhaupt (3) radial verlagerbaren hydrostatischen Stützelementen (14), welche in ihrer am Innenumfang (4) der Hohlwalze (1) zur Anlage bringbaren Anlagefläche (24) ringsum berandete, mit Druckflüssigkeit füllbare Lagertaschen (39) aufweisen,
mit einer ersten Zuleitung (46) zu jedem Stützelement (14), die an die jeweilige Lagertasche (39) angeschlossen ist,
mit einem in oder an jedem Stützelement (14) ausgebildeten, im wesentlichen geschlossenen Zylinderraum (49), unter deren Druck die Verlagerung des Stützelements (14) gegen den Innenumfang (4) der Hohlwalze (1) bewirkbar ist und deren Wirkungsquerschnitt höchstens 10 % des Wirkungsquerschnitts der Lagertaschen (39) beträgt,
mit einer zweiten Zuleitung (26), die an den Zylinderraum (49) angeschlossen ist,
mit einer außerhalb der Walze (100) angeordneten Versorgungseinheit (V) zur separaten Beaufschlagung der Zuleitungen (46,26) mit Druckflüssigkeit,
und mit einer Schnellöffnungseinrichtung, mittels derer der Walzspalt (31) im Falle einer Bahnstörung rasch zu öffnen ist,
**dadurch gekennzeichnet,**
daß die Schnellöffnungseinrichtung in Gestalt eines Ventils (20) in der zweiten Zuleitung (26) angeordnet ist, welches mittels eines auf eine Bahnstörung ansprechenden Sensors (60) über ein Steuergerät (55) schlagartig zu öffnen ist, um den Zylinderraum (49) eines jeden Stützelements (14) mit dem drucklosen Vorrat (9) zu verbinden.

## Claims

1. prising at least one controllable-deflection roller (100),
with a rotating shell (1) forming the working roller periphery (2) and a non-rotatable beam which extends through the shell lengthwise and which has all round a distance from the inner periphery (4) of the shell (1),
with a plurality of hydrostatic support elements (14) arranged in a row along the beam (3) and radially displaceable against the beam (3), said support elements having bearing pockets (39) in their abutment surface (24) adapted to be brought into contact with the inner periphery (4) of the shell (1), said bearing pockets (39) being bordered all round and fillable with pressure fluid,
with a first supply line (46) to each support element (14), said supply line being connected to the respective bearing pocket (39),
with a substantially closed cylinder chamber (49) formed in or on each support element (14), under the pressure of which chamber the displacement of the support element (14) against the inner periphery of the shell (1) can be effected and the operative cross-section of which is at maximum 10% of the operative cross-section of the bearing pockets (39),
with a second supply line (26) connected to the cylinder chamber (49),
with a supply unit (V) which is disposed outside the roller (100) for the separate supply of pressure fluid to the supply lines (46, 26),
and with a rapid-opening system by means of which the nip (31) can be rapidly opened in the event of a web disturbance,
**characterised in that**
the rapid-opening system in the form of a valve (20) is disposed in the second supply line (26) and can be opened abruptly via a control device (55) by means of a sensor (60) responding to a web disturbance, in order to connect the cylinder chamber (49) of each support element (14) to the pressureless supply (9).

## Revendications

1. Calandre (K) comportant
- au moins un cylindre (100) susceptible d'être commandé en flexion,
- un cylindre creux rotatif (1), dont la périphérie (2) constitue la surface de travail et dans lequel passe, sur toute sa longueur, une traverse fixe (3) longeant la périphérie interne (4) du cylindre (1) à une certaine distance,
- disposés en ligne le long de la traverse (3) et mobiles radialement par rapport à celle-ci, plusieurs éléments hydrostatique de soutien (14) qui présentent sur sa portée d'appui (24) qui peut venir s'appliquer sur la périphérie interne (4) du cylindre creux (1), une poche de palier (39) bordée périphériquement et qui peut être remplie de liquide sous pression,
- une première canalisation (46) d'amenée à chaque élément de soutien (14) qui est raccordée à la poche de palier (39) correspondante,
- dans ou sur chaque élément de soutien (14) une chambre de cylindre (49) essentiellement fermée qui assure par pression le déplacement de l'élément de soutien (14) vers la périphérie interne (4) du cylindre creux (1) et dont la section efficace ne dépasse pas 10 % de la section efficace de la poche de palier (39) correspondante,
- une seconde canalisation d'amenée (26) raccordée à la chambre de cylindre (49),
- une unité d'alimentation (V) montée à l'extérieur du cylindre (100) et alimentant séparément les conduites (46, 26) de liquide sous pression,
- un dispositif d'ouverture rapide permettant d'ouvrir la fente de calandrage (31), en cas de détérioration de la bande,
caractérisée en ce que
le dispositif d'ouverture rapide est constitué par une soupape (20) montée dans la seconde canalisation (26) qui peut être ouverte brutalement par un dispositif de commande (55) au moyen d'un détecteur (60) réagissant à la détérioration de la bande, mettant ainsi la chambre de cylindre (49) de chaque élément de soutien (14) en liaison avec le réservoir d'alimentation (9) qui n'est pas sous pression.
